(19) Europäisches Patentamt
European Patent Office
Office européen des brevets

(11) Veröffentlichungsnummer: **0 486 531 B1**

(12) **EUROPÄISCHE PATENTSCHRIFT**

(45) Veröffentlichungstag der Patentschrift: **19.10.94**

(51) Int. Cl.$^5$: **C09B 5/62**

(21) Anmeldenummer: **90911597.4**

(22) Anmeldetag: **09.08.90**

(86) Internationale Anmeldenummer:
**PCT/EP90/01312**

(87) Internationale Veröffentlichungsnummer:
**WO 91/02032 (21.02.91 91/05)**

# (54) SULFONSÄUREGRUPPENHALTIGE PERYLENVERBINDUNGEN, VERFAHREN ZU IHRER HERSTELLUNG UND IHRE VERWENDUNG.

(30) Priorität: **11.08.89 DE 3926563**

(43) Veröffentlichungstag der Anmeldung:
**27.05.92 Patentblatt 92/22**

(45) Bekanntmachung des Hinweises auf die Patenterteilung:
**19.10.94 Patentblatt 94/42**

(84) Benannte Vertragsstaaten:
**CH DE FR GB IT LI**

(56) Entgegenhaltungen:
**DE-A- 3 703 513**
**FR-A- 1 570 579**

(73) Patentinhaber: **HOECHST AKTIENGESELL-SCHAFT**

**D-65926 Frankfurt (DE)**

(72) Erfinder: **DIETZ, Erwin**
**St.-Matthäus-Strasse 7**
**D-6233 Kelkheim (DE)**
Erfinder: **URBAN, Manfred**
**Steigerwaldstrase 2a**
**D-6000 Wiesbaden (DE)**

**EP 0 486 531 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue, wertvolle sulfonsäuregruppenhaltige Perylenverbindungen, die der allgemeinen Formel I

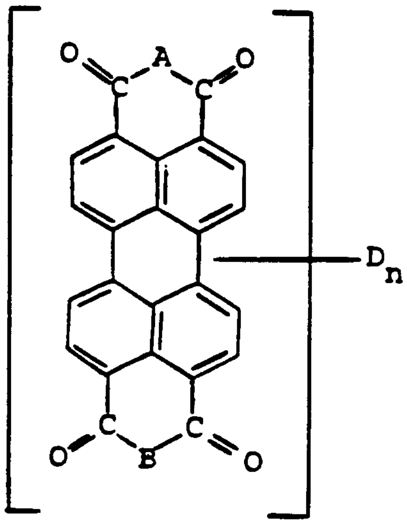

(I),

entsprechen und in welcher

- A einen bivalenten Rest -O-, >$NR^1$ oder >$N-R^2-SO_3^-X^+$ und
- B den bivalenten Rest >$N-R^2-SO_3^-X^+$ bedeutet,
- D ein Chlor- oder Bromatom und sofern n > 1 ggf. eine Kombination davon darstellt, und
- n eine Zahl von 0 bis 8 ist;

wobei in den obigen Resten A und B dann

- $R^1$ für ein Wasserstoffatom oder eine $C_1$-$C_{30}$-Alkylgruppe, bevorzugt $C_1$-$C_{18}$-Alkyl und insbesondere $C_1$-$C_4$-Alkyl, oder für eine Arylgruppe, bevorzugt Phenyl steht, die unsubstituiert oder durch Halogen wie Chlor oder Brom, Sulfo, $C_1$-$C_4$-Alkyl wie Methyl oder Ethyl, $C_1$-$C_4$-Alkoxy wie Methoxy oder Ethoxy, oder Phenylazo ein- oder mehrfach substituiert sein kann,
- $R^2$ für eine geradkettige oder verzweigte $C_1$-$C_6$-Alkylengruppe, insbesondere Ethylen oder Propylen, steht,
  und
- $X^+$ das Hydron $H^+$ oder das Äquivalent

$$\frac{M^{m+}}{m}$$

eines Metallkations aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 ist, wie z.B. $Li^{1+}$, $Na^{1+}$, $K^{1+}$, $Mg^{2+}$, $Ca^{2+}$, $Sr^{2+}$, $Ba^{2+}$, $Mn^{2+}$, $Cu^{2+}$, $Ni^{2+}$, $Cd^{2+}$, $Co^{2+}$, $Zn^{2+}$, $Fe^{2+}$, $Al^{3+}$, $Cr^{3+}$ oder $Fe^{3+}$; oder ein Ammoniumion $N^+R^3R^4R^5R^6$ definiert, wobei die Substituenten $R^3$, $R^4$, $R^5$ und $R^6$ am quartären N-Atom unabhängig voneinander jeweils ein Wasserstoffatom oder eine Gruppe aus der Reihe $C_1$-$C_{30}$-Alkyl, $C_1$-$C_{30}$-Alkenyl, $C_5$-$C_{30}$-Cycloalkyl, unsubstituiertes oder durch $C_1$-$C_8$-alkyliertes Phenyl oder eine (Poly)alkylenoxygruppe

$$-(\overset{R^7}{\overset{|}{C}}H-CH_2-O-)_k-H$$

sind, in der $R^7$ für Wasserstoff oder $C_1$-$C_4$-Alkyl steht und k eine Zahl von 1 bis 30 ist, und in

denen ggf. als $R^3$, $R^4$, $R^5$ und/oder $R^6$ ausgewiesenes Alkyl, Alkenyl, Cycloalkyl, Phenyl oder Alkylphenyl außerdem durch Amino, Hydroxy und/oder Carboxy substituiert sein können;
oder wobei die Substituenten $R^3$ und $R^4$ zusammen mit dem quartären N-Atom ein fünf- bis siebengliedriges gesättigtes Ringsystem, das ggf. noch weitere Heteroatome wie ein O-, S- und/oder N-Atom enthält, bilden können, z.B. vom Pyrrolidon-, Imidazolidin-, Hexamethylenimin-, Piperidin-, Piperazin- oder Morpholin-Typ;
oder wobei die Substituenten $R^3$, $R^4$ und $R^5$ zusammen mit dem quartären N-Atom ein fünf- bis siebengliedriges aromatisches Ringsystem, das ggf. noch weitere Heteroatome wie ein O-, S- und/oder N-Atom enthält und an dem ggf. zusätzliche Ringe ankondensiert sind, bilden können, z.B. vom Pyrrol-, Imidazol-, Pyridin-, Picolin-, Pyrazin-, Chinolin- oder Isochinolin-Typ mit Ausnahme der Verbindung, worin n die Zahl Null A und B jeweils > $N\text{-}CH_2\text{-}CH_2\text{-}SO_3H$ bedeuten.

Besonderes Interesse haben erfindungsgemäß die Verbindungen der allgemeinen Formel I gefunden, in denen

A und B identisch sind und jeweils den bivalenten Rest $>N\text{-}R^2\text{-}SO_3^-X^+$ bedeuten sowie
D und n wie vorstehend angegeben definiert sind,

wobei in den obigen Resten A und B dann

$R^2$ die weiter oben angewiesene Bedeutung zukommt, und
$X^+$ das Hydron $H^+$ oder das Äquivalent

$$\frac{M^{m+}}{m}$$

eines Metallkations der weiter oben individuell bezeichneten chemischen Elemente,
oder ein Ammoniumion $N^+R^3R^4R^5R^6$ darstellt, in dem die Substituenten $R^3$, $R^4$ und $R^5$ am quartären N-Atom unabhängig voneinander jeweils ein Wasserstoffatom oder die Gruppe $C_2$-$C_3$-Hydroxyalkyl, und $R^6$ eine der Gruppen aus der Reihe $C_1$-$C_{30}$-Alkyl, $C_1$-$C_{30}$-Alkenyl, $C_2$-$C_3$-Hydroxyalkyl oder $C_5$-$C_6$-Cycloalkyl sind.

Als außerordentlich wertvoll werden nach der Erfindung sulfonsäuregruppenhaltige Perylenverbindungen der allgemeinen Formel I eingestuft, in denen

A einen bivalenten Rest -O-, $>NR^1$ oder $>N\text{-}CH_2\text{-}CH_2\text{-}SO_3^-X^+$ und
B den bivalenten Rest $>N\text{-}CH_2\text{-}CH_2\text{-}SO_3^-X^+$ bedeutet sowie
n die Zahl 0 ist,

wobei in den obigen Resten A und B dann

$R^1$ die weiter oben angewiesene Bedeutung zukommt, und
$X^+$ das Kation $H^+$ oder

$$\frac{Ca^{2+}}{2}$$

oder ein Ammoniumion $N^+H_3R^6$ darstellt, in dem $R^6$ der unmittelbar zuvor bezeichneten Art zuzurechnen ist.

Gegenstand der in Rede stehenden Erfindung ist auch ein Verfahren zur Herstellung der zuvor beschriebenen sulfonsäuregruppenhaltigen Perylenverbindungen mit der chemischen Struktur gemäß Formel I. Diese neuen Verbindungen können durch Umsetzung von Perylen-3,4,9,10-tetracarbonsäure-monoanhydrid-monoalkalisalzen, insbesondere dem Monokaliumsalz, Perylen-3,4,9,10-tetracarbonsäure-monoanhydrid-monoimid, -N-monoalkyl- bzw. -N-monoarylimiden oder Perylen-3,4,9,10-tetracarbonsäure-dianhydrid mit sulfonsäuregruppenhaltigen, primären aliphatischen Aminen der allgemeinen Formel II

$H_2N\text{-}R^2\text{-}SO_3^-X^+$ (II),

in der $R^2$ und $X^+$ die oben angegebene Bedeutung besitzen, beispielsweise Aminoalkansulfonsäuren bzw. deren Salzen wie insbesondere Taurin (2-Aminoethansulfonsäure), erhalten werden, wobei man die Kondensation der Ausgangsstoffe in wäßriger Lösung, vorzugsweise unter alkalischen pH-Bedingungen, bei Temperaturen im Bereich zwischen 50° und 180°C durchführt. Zweckmäßig werden hierbei die Amine der Formel II im Überschuß eingesetzt. Die Isolierung der gebildeten Verfahrensprodukte der Formel I aus dem

Reaktionsgemisch erfolgt durch Filtration ihrer Salze, welche sich hernach durch Behandlung mit starken Mineralsäuren wie Schwefelsäure in die entsprechenden freien Sulfonsäuren umwandeln lassen.

Anstelle von in wäßrigem Medium kann die Kondensation der beiden Reaktionspartner auch in hochsiedenden, inerten organischen Lösemitteln, wie z.B. Chinolin, Imidazol, Naphthalin, -Chlornaphthalin, Trichlorbenzol oder Phenol, bei Temperaturen > 100 °C, bevorzugt im Bereich zwischen 180 ° und 230 °C, gegebenenfalls in Gegenwart von bekannten Katalysatoren (Reaktionsbeschleunigern) wie Schwefelsäure, Phosphorsäure oder Zinksalzen, vorgenommen werden. Entsprechend dieser abgewandelten Synthesemöglichkeit filtriert man die als Salz entstandenen sulfonsäuregruppenhaltigen Perylenverbindungen der Formel I vorteilhaft bei höheren Temperaturen wie im Bereich von 80 ° bis 120 °C aus dem Umsetzungsgemisch ab, gegebenenfalls nach vorherigem Verdünnen desselben mit inerten organischen Lösemitteln, z.B. aliphatischen Alkoholen oder aliphatischen Ketonen. Gewünschtenfalls läßt sich das abgetrennte Sulfonat anschließend in üblicher Weise durch Hydrolyse in die freie Säureform überführen.

Sofern erfindungsgemäß die Erzeugung von an den beiden Imidstickstoff-Atomen unsymmetrisch substituierten Perylenverbindungen der Formel I ins Auge gefaßt ist, dann geschieht dies unter Ausnutzung der voneinander abweichenden Reaktionsbereitschaft von in Bezug auf die beiden benachbarten Säurepaare unterschiedlich strukturierten Derivaten der als Ausgangsmaterial verwendeten Tetrasäuren vom Perylen-Typ durch ggf. stufenweise Umsetzung mit den sulfonsäuregruppenhaltigen Aminen der Formel II bei besonderer Berücksichtigung der Einsatzmenge derselben sowie der Umsetzungsbedingungen, oder ein solches Vorhaben findet durch Reaktion von primären aliphatischen oder aromatischen Aminen $R^1$-$NH_2$ mit am vorhandenen Imidstickstoff schon einseitig Sulfonsäurealkylengruppen $-R^2-SO_3^-X^+$ aufweisenden Perylentetracarbonsäuremonoanhydrid-monoimiden der Formel I statt.

Halogenierte sulfonsäuregruppenhaltige Perylenverbindungen der Formel I mit n > 0 sind erhältlich durch Kondensation von entsprechenden Halogenierungsprodukten (n > 0) der oben als Ausgangsverbindungen erwähnten Perylentetracarbonsäure-Abkömmlinge mit sulfonsäuregruppenhaltigen Aminen der Formel II, oder durch nachträgliche Halogenierung bereits fertiggestellter, aber halogenfreier (n = 0) Verfahrensprodukte der Formel I.

Die Salze der sulfonsäuregruppenhaltigen Perylenverbindungen der Formel I mit $X^+ \neq H^+$ fallen - wie oben erläutert - bereits bei der Synthese an, oder sie werden - wenn ein bestimmtes Kation $X^+$ in Betracht gezogen wird - durch gezielte Behandlung der freien Sulfonsäuren ($X^+ = H^+$) mit Metallsalzen oder Aminen in Einklang mit der diesbezüglichen Bedeutung von $X^+$, vorzugsweise in wäßriger Lösung, separat angefertigt.

Die DE-OS 3 703 513 beschreibt Sulfonsäuregruppen enthaltende Perylentetracarbonsäurearylenimide, die sich aber strukturell von den erfindungsgemäßen Verbindungen unterscheiden und als wasserlösliche Fluoreszenzfarbstoffe verwendet werden. Die Wasserlöslichkeit dieser Farbstoffe wird durch Einführen von Sulfonsäuregruppen in die beiden terminalen Reste der Farbstoffe erreicht. Diese Verbindungen eignen sich jedoch nicht für den Einsatz als Pigmente oder Pigmentdispergatoren.

Die Eigenschaften der beanspruchten, eine oder zwei anionische Sulfonsäure-/Sulfonat-Gruppen $-R^2-SO_3^-X^+$ aufweisenden Perylenverbindungen der Formel I lassen sich durch spezielle Auswahl sowohl eines am anderen Imidstickstoff ggf. vorhandenen Substituenten $R^1$ bzw. der Anzahl n von Halogenatomen D am polycyclischen System, als auch durch die des Kations $X^+$ in weiten Grenzen steuern. Das für den jeweiligen Anwendungszweck geforderte Eigenschaftsprofil dieser neuen Verbindungen muß durch orientierende Versuche ausgerichtet und gezielt optimiert werden. Je nach Art des Substituenten und des Kations resultieren somit Verbindungen, die in Wasser und polaren organischen Lösungsmitteln, in unpolaren organischen Lösungsmitteln oder Kunststoffen löslich sind. Die Verträglichkeit der Verfahrenserzeugnisse in den betreffenden Medien kann zusätzlich durch Einführung hydrophober oder hydrophiler Substituenten oder Kationen beeinflußt werden. Hydrophobe Aminreste (langkettige Alkylengruppen) begünstigen im allgemeinen die Löslichkeit in organischen Lösungsmitteln und Kunststoffen. Hydrophile Amine bzw. wasserlösliche Amine fördern die Löslichkeit in wäßrigen bzw. polaren Systemen.

Es ist erfindungsgemäß auch möglich, durch entsprechende Variation des Kations sehr schwer lösliche Verbindungen der Formel I in die Hand zu bekommen, die aufgrund dieses Verhaltens schon von sich aus als Pigmente verwendet werden können. Ein solcher Sachverhalt trifft auf ein- und insbesondere zwei- oder mehrwertige Metallkationen zu.

Die erfindungsgemäßen sulfonierten Perylenverbindungen der Formel I haben sich als wertvolle Farbmittel erwiesen. Je nach der Natur von Substituent und Kation kann man sie für diese Aufgabe als Pigmente, Pigmentdispergatoren oder Fluoreszenzfarbstoffe in Betracht ziehen. Die halogenierten, sulfonierten Perylenverbindungen dieses Typs sind als freie Sulfonsäuren wie auch in Form ihrer Salze gleichermaßen in wäßrigen und in organischen Medien löslich. Sie zeichnen sich durch die damit erzielbaren hohen Fluoreszenzintensitäten und guten Echtheiten aus und sind deshalb brauchbar für den Einsatz als Fluoreszenzfarbstoffe zum Färben von wäßrigen oder wäßrig-organischen Medien sowie von flüssigen oder festen organischen Stoffen.

Dergestalt eignen sich die erfindungsgemäßen Perylenverbindungen für die Nutzbarmachung in Lichtsammelsystemen und können bei analytischen Nachweismethoden, in farbigen Flüssigkristallanzeigen, zur Herstellung von Kaltlichtquellen, zur Materialprüfung und zur Untersuchung von Mikrostrukturen von Halbleiterbauelementen sowie für Markierungs- und Hinweiszwecke Verwertung finden.

Flüssige organische Stoffe, die man mit solcherlei Fluoreszenzfarbstoffen anfärben kann, sind beispielsweise Alkohole, Ketone, Halogenkohlenwasserstoffe, Ether, Ester, aromatische und aliphatische Kohlenwasserstoffe, Nitrile, Amine, Nitroverbindungen, Amide oder Gemische derselben untereinander sowie Mischungen dieser Lösungsmittel mit Bindemitteln.

Feste organische Stoffe, die man mit derartigen Fluoreszenzfarbstoffen anfärben kann, sind Kunstharze und Kunststoffe, wie beispielsweise Aminoplaste, insbesondere Harnstoff- und Melamin-Formaldehydharze, Alkydharze, Acrylharze, Phenoplaste, Polycarbonate, Polyolefine wie Polystyrol, Polyvinylchlorid, Polyethylen, Polypropylen, Polyacrylnitril, Polyacrylsäureester, Polyamide, Polyurethane oder Polyester, die als Substanz alleine oder in Form von Mischungen oder Copolymerisaten zur Anwendung gelangen können.

Die leicht löslichen und die schwerlöslichen, sulfonierten Perylenverbindungen sind unter dem Einfluß ihres anionischen Charakters außerdem hochwirksame Dispergatoren zur Herstellung von Pigmentzubereitungen. Präparationen dieser Gattung besitzen hervorragende coloristische und rheologische Eigenschaften.

Die Erdalkalisalze, die Schwermetallsalze sowie die Aminsalze der Sulfonsäuren vom Perylen-Typ können wegen ihrer Schwerlöslichkeit unmittelbar zur Ausnutzung als Pigmente in Frage kommen. Sie zeigen sehr gute coloristische und rheologische Eigenschaften.

Die durch Mischen der leichtlöslichen bzw. der schwerlöslichen, sulfonierten Perylenverbindungen gemäß Formel I als Dispergator mit Basis-Pigmenten gleicher oder unterschiedlicher chemischer Herkunft, z.B. aus der Klasse von Azo-, Chinacridon- und vor allem von Perylen-Verbindungen, produzierten Pigmentzubereitungen sowie die aus Anlaß ihrer Schwerlöslichkeit zum Gebrauch als Pigmente von allein geeigneten Erdalkalisalze, Schwermetallsalze und Aminsalze der Sulfonsäuren lassen sich hervorragend zum Pigmentieren (Einfärben) von hochmolekularen organischen Materialien natürlicher oder synthetischer Herkunft einsetzen.

Hochmolekulare organische Materialien, die mit den beanspruchten, Sulfonsäuregruppen aufweisenden Perylenverbindungen der Formel I oder mit auf Basis von Produkten dieses Typs erstellten Pigmentzubereitungen coloriert werden können, sind beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrysäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäßen Perylenverbindungen oder unter deren Beteiligung erzeugte Pigmentzubereitungen als Toner oder in Form von Präparationen oder Dispersionen einzusetzen. Bezogen auf das zu pigmentierende hochmolekulare organische Material setzt man die beanspruchten Perylenverbindungen bzw. davon abgeleitete Pigmentzubereitungen in einer Menge von vorzugsweise 1 bis 10 Gew.-% ein.

Besonders bevorzugte Lacksysteme sind in dieser Hinsicht Einbrennlacke aus der Klasse der Alkyd-/Melaminharz- oder Acryl-/Melaminharz-Lacke sowie Zweikomponentenlacke auf Basis von mit Polyisocyanat vernetzbarer Acrylharze. Von der Vielzahl der pigmentierbaren Druckfarben sind Druckfarben auf Basis Nitrocellulose besonders zu erwähnen.

Die erfindungsgemäßen Perylenverbindungen oder unter deren Mitwirkung resultierende Pigmentzubereitungen sind in vielen Anwendungsmedien leicht und bis zu hohen Feinheiten dispergierbar. Diese Dispersionen besitzen eine hohe Flockungsstabilität und zeigen hervorragende rheologische Eigenschaften selbst bei hoher Pigmentierung. Mit ihnen lassen sich Lackierungen und Drucke von hoher Farbstärke, hohem Glanz und hoher Transparenz mit hervorragenden Echtheitseigenschaften herstellen.

Die erfindungsgemäßen Perylenverbindungen oder Pigmentzubereitungen auf solcher Grundlage sind als polymerlösliche Farbmittel auch hervorragend geeignet zum Einfärben von verformbaren Kunststoffen, insbesondere Polyvinylchlorid, Polyethylen und Polypropylen. Es werden Färbungen von hoher Farbstärke und sehr guter Dispergierbarkeit erhalten.

Zur Beurteilung der Eigenschaften der beanspruchten Produkte gemäß Formel I oder in Verbindung damit erzeugten Pigmentzubereitungen in Lacksystemen wurden aus der Vielzahl der bekannten Systeme

ein Alkyd-/Melaminharz-Lack (AM6) auf Basis eines mittelöligen, nicht-trocknenden Alkydharzes aus synthetischen Fettsäuren und Phthalsäureanhydrid und eines mit Butanol veretherten Melaminharzes und Anteilen eines nicht-trocknenden Alkydharzes auf Basis von Ricinensäure (kurzölig) sowie ein Acrylharz-Einbrennlack auf Basis einer nicht-wäßrigen Dispersion (TSA-NAD) ausgewählt. In den nachfolgenden Beispielen wird darauf unter der Bezeichnung AM6 bzw. TSA-NAD verwiesen.

Die Rheologie des Mahlguts nach der Dispergierung (Millbase-Rheologie) wird anhand der folgenden fünfstufigen Skala beurteilt:

| | | | |
|---|---|---|---|
| 5<br>4<br>3 | dünnflüssig<br>flüssig<br>dickflüssig | 2<br>1 | leicht gestockt<br>gestockt |

Nach dem Verdünnen des Mahlguts auf die Pigmentendkonzentration wurde die Viskosität mit dem Viskospatel nach Rossmann, Typ 301, der Firma Erichsen beurteilt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

Die Ausprüfungen in Polyvinylchlorid (PVC) wurden bei 120°C und 160°C vorgenommen.

In den nachstehenden Beispielen beziehen sich Teile jeweils auf Gewichtsteile und Prozente jeweils auf Gewichtsprozente der so beschriebenen Substanzen. Die zur Identifizierung benutzten Gattungsbezeichnungen für erfindungsgemäß eingesetzte Pigmente sowie darauf gerichtete C.I.-Nummern sind dem COLOUR INDEX, 3. Auflage 1971 sowie Ergänzungen 1975, 1982 und 1987 entnommen.

**Beispiel 1**

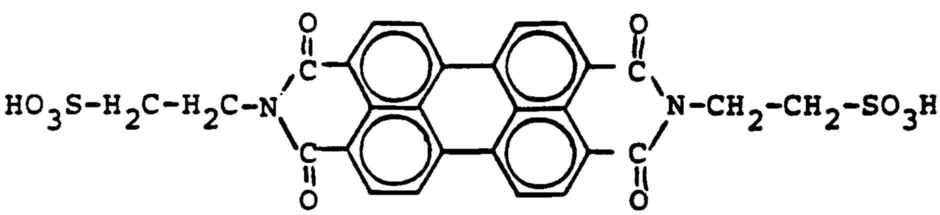
(III),

In einem Autoklaven werden 39,2 g Perylen-3,4,9,10-tetracarbonsäure-dianhydridin 1200 ml Wasser suspendiert. Zu dieser Suspension werden 50 g Taurin und 26,4 g Kaliumhydroxid (85 %ig) gegeben, worauf der Ansatz 5 Stunden bei 150°C gerührt wird. Nach Abkühlen auf 25°C wird das ausgefallene Umsetzungsprodukt abgesaugt, mit Wasser neutral gewaschen und bei 80°C getrocknet.
Die so als Dikaliumsalz isolierte Verbindung der Formel III wird zur Überführung in die Säureform nun bei 25°C zunächst in 1400 g 100 %ige Schwefelsäure eingetragen und gelöst. Danach werden in diese Lösung außerdem 930 g 50 %ige Schwefelsäure tropfenweise zugefügt, wobei die Temperatur bis 80°C ansteigen darf. Anschließend läßt man auf 25°C abkühlen; die freigesetzte Sulfonsäure wird dann über eine Glasfritte abgesaugt, mit 80 %iger Schwefelsäure nachgewaschen, durch Behandlung mit 31 %iger Salzsäure sulfatfrei gewaschen und im Vakuum bei 80°C getrocknet.

Ausbeute: 59,0 g einer Verbindung mit der oben genannten Formel III, die 6,2 % Kristallwasser enthält, entsprechend 55,3 g 100 %ig (= 91,3 % d. Th.).

Analyse: $C_{28}H_{18}N_2S_2O_{10}$
Unter Berücksichtigung von 6,2 % $H_2O$

| | | | | |
|---|---|---|---|---|
| Ber.: | C 55,4 %; | H 3,0 %; | N 4,6 %; | S 10,6 % |
| Gef.: | C 55,5 %; | H 2,8 %, | N 4,7 %; | S 10,1 % |

$^1H$-NMR-Spektrum in $D_2SO_4$
Shift-Lage ($^1H$) (Duplett 8,77; 8,70); 4,68; 3,64

**Beispiel 1a**

19,2 g C.I. Pigment Red 179 (Nr. 71130) vom Perylen-Typ, hergestellt analog dem in Beispiel 1 der EP-PS 0 088 392 beschriebenen Verfahren ohne Zusatz von oberflächenaktiven Mitteln, werden mit 0,8 g Perylenverbindung mit der Formel III als Pigmentdispergator gemischt.
Man erhält eine Pigmentzubereitung, die bei der Ausprüfung im TSA-NAD-Lack transparente, helle, sehr farbstarke und reine Lackierungen mit hohem Glanz liefert. Die Metallic-Lackierungen sind sehr farbstark und rein. Die Millbase-Rheologie des Produktes (15 %ig) wird mit Note 5 bewertet. Ohne Beimischung des Pigmentdispergators sind die mit dem Farbmittel erzeugten Ausfärbungen dagegen deckender und farbschwächer. Die Millbase-Rheologie wird hier mit Note 1 bewertet.

**Beispiel 1b**

17,6 g C.I. Pigment Red 179 (Nr. 71130) vom Perylen-Typ, hergestellt analog der Vorschrift von Beispiel 1 der EP-PS 0 088 392 ohne Zusatz von oberflächenaktiven Mitteln, werden mit 2,4 g Perylenverbindung mit der Formel III als Pigmentdispergator gemischt.
Man erhält eine Pigmentzubereitung, die bei der Ausprüfung im TSA-NAD-Lack transparente, helle, sehr farbstarke und reine Lackierungen mit hohem Glanz liefert. Die Farbstärke und der Glanz dieser Lackierungen sind höher als bei den nach Beispiel 1a angefertigten Lackierungen. Die Metallic-Lackierungen sind sehr farbstark und rein. Die Millbase-Rheologie des Produktes (15 %ig) wird in diesem Fall mit Note 4 - 5 bewertet. Ohne Beimischung des Pigmentdispergators sind die mit dem Farbmittel erzeugten Ausfärbungen dagegen deckender und farbschwächer. Die Millbase-Rheologie (15 %ig) wird hier mit Note 1 bewertet.

**Beispiel 1c**

10 g Perylenverbindung mit der Formel III werden in 150 ml Wasser eingetragen und gelöst. Danach fügt man eine Lösung aus 10 g Ethanol und 1 g Ölsäure-monoethanolamid hinzu und bringt den Ansatz unter Erhitzen zum Sieden. Bei Siedetemperatur wird nun innerhalb von 10 Minuten außerdem eine Lösung aus 10 g Calciumchlorid (wasserfrei) und 200 ml Wasser zugetropft. Nachdem man noch 3 Stunden bei Siedetemperatur gerührt hat, wird das abgeschiedene Reaktionsprodukt sodann abgesaugt, mittels Wasser chloridfrei gewaschen und bei 80 °C getrocknet.
Man erhält 10,8 g eines Pigments (als Ca-Salz), das im TSA-NAD-Lack transparente, marronfarbene Lackierungen mit hohem Glanz liefert. Die Millbase-Rheologie des Produktes (15 %ig) wird mit Note 5 bewertet.

**Beispiel 1d**

10 g Perylenverbindung mit der Formel III werden in 150 ml Wasser eingetragen und gelöst. Danach fügt man eine Lösung aus 20 g Ethanol und 2 g Ölsäure-monoethanolamid hinzu und bringt den Ansatz unter Erhitzen zum Sieden. Bei Siedetemperatur wird nun innerhalb von 10 Minuten außerdem eine Lösung aus 10 g Nickelsulfat-hexahydrat und 200 ml Wasser zugetropft. Nachdem man noch 3 Stunden bei Siedetemperatur gerührt hat, wird das abgeschiedene Reaktionsprodukt sodann abgesaugt, mittels Wasser chloridfrei gewaschen und bei 80 °C getrocknet.
Man erhält 12,7 g eines Pigments (als Ni-Salz), das im TSA-NAD-Lack transparente, marronfarbene Lackierungen mit hohem Glanz liefert. Die Millbase-Rheologie des Produktes (15 %ig) wird mit Note 5 bewertet.

**Beispiel 1e**

15 g Perylenverbindung mit der Formel III werden in 150 ml Wasser eingetragen und gelöst. Bei Siedetemperatur wird nun innerhalb von 15 Minuten eine Lösung aus 15,5 g Abiethylamin und 50 ml Ethanol zugetropft. Nachdem man noch 1 Stunde bei Siedetemperatur gerührt hat, wird das abgeschiedene Reaktionsprodukt abgesaugt, mit Wasser gewaschen und bei 80 °C getrocknet.
Man erhält 28,6 g eines Pigments (als Abietylammoniumsalz), das im TSA-NAD-Lack hochtransparente, scharlachfarbene Lackierungen mit hohem Glanz liefert. Die Millbase-Rheologie des Produktes (15 %ig) wird mit Note 5 bewertet. Die Überlackierechtheit ist einwandfrei.

**Beispiel 1f**

30 g Perylen-3,4,9,10-tetracarbonsäure-N,N'-bis-(3',5'-dimethylphenylimid), hergestellt als Rohpigment nach den Angaben in Beispiel 1 der DE-AS 1 067 157, werden in einen 1,4-Liter-Edelstahlbehälter eingebracht, der mit 1400 g Porzellankugeln (12 mm Durchmesser) als Mahlkörper gefüllt ist, und dort vorgelegt. Darüber hinaus werden dem Ansatz noch 90 g Natriumsulfat (wasserfrei), 0,7 g Stearylamin und 0,75 g Perylenverbindung mit der Formel III als Pigmentdispergator zugegeben und die Mischung wird nunmehr 8 Stunden lang unter Schütteln auf einer Schwingmühle (Typ ®Vibratom; Hersteller: Siebtechnik Mühlheim) fein vermahlen. Das resultierende Mahlgut wird anschließend von den Mahlkörpern abgesiebt und unter Behandlung mittels heißem Wasser 1 Stunde bei 90°C ausgerührt. Danach wird das Verfahrenserzeugnis abgesaugt, mit Hilfe von Wasser sulfatfrei gewaschen und bei 80°C getrocknet.
Man erhält 28,9 g einer Pigmentzubereitung auf Basis von C.I. Pigment Red 149 (Nr. 71137) vom Perylen-Typ. Bei der Ausprüfung des Produktes in PVC werden transparente, helle, farbstarke und reine Ausfärbungen mit einwandfreier Ausblutechtheit erzielt. Das ohne Zusatz des Dispergators mit der Formel III hergestellte Pigment liefert in PVC dagegen deckendere, dunklere und blauere Ausfärbungen.

**Beispiel 1g**

30 g Perylen-3,4,9,10-tetracarbonsäure-diimid mit einem Bromgehalt von 25,45 %, hergestellt analog der Vorschrift von Beispiel 9 der EP-PS 0 039 912, werden in ein 1-Liter-Kunststoffgefäß eingebracht, das mit 1400 g Cylpebs (aus Korund, 12 mm Durchmesser; Hersteller: Groh GmbH, Hof) als Mahlkörper gefüllt ist, und dort vorgelegt. Außerdem werden dem Ansatz nacheinander noch 3 g Perylenverbindung mit der Formel III als Pigmentdispergator und 3 g Stearylamin zugegeben. Anschließend wird dieses Gemisch 12 Stunden lang unter Schütteln auf einer Schwingmühle (wie in Beispiel 1f) fein vermahlen, worauf man das Mahlgut durch Absieben von den Mahlkörpern isoliert. 31 g des obigen Mahlguts werden nunmehr in 340 ml N-Methylpyrrolidon eingetragen, auf 50°C erhitzt und 3 Stunden bei dieser Temperatur nachgerührt. Sodann fügt man 200 ml Wasser hinzu, saugt das Umsetzungsprodukt ab, wäscht dieses durch Behandlung mit Wasser N-methylpyrrolidonfrei und trocknet es bei 80°C.
Man erhält 29,5 g einer Pigmentzubereitung auf Basis von bromiertem Perylen-3,4,9,10-tetracarbonsäurediimid. Bei der Ausfärbung des Produktes im TSA-NAD-Lack resultieren transparente, helle, farbstarke und reine Lackierungen. Ohne den Zusatz des Dispergators mit der Formel III sind die Lackierungen mit dem Pigment dagegen deckend, dunkel und farbschwach. Die rheologischen Eigenschaften sind in diesen beiden Fällen etwa vergleichbar. Im Nitrocellulosetiefdruck erhält man mit der obigen Zubereitung sehr transparente, farbstarke und reine Ausfärbungen. Ohne den Zusatz des Dispergators mit der Formel III sind die Ausfärbungen mit dem Produkt deckender, farbschwächer, blauer und trüber.

**Beispiel 2**

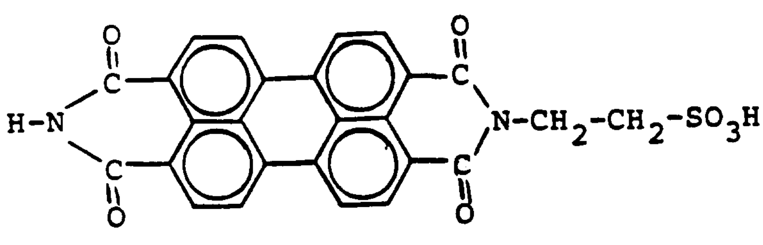

(IV)

In einem Autoklaven werden 1200 ml Wasser vorgelegt und darin werden 37,6 g Taurin gelöst. Durch weiteren Zusatz von 12,6 g kaliumhydroxid (85 %ig) wird in dieser Lösung ein pH-Wert von 9,5 eingestellt. Daraufhin trägt man in die Vorlage 39,1 g Perylen-3,4,9,10-tetracarbonsäure-monoanhydrid-monoimid ein und der Ansatz wird dann 3 Stunden bei 150°C gerührt. Nach Abkühlen auf 25°C wird das als K-Salz entstandene Umsetzungsprodukt abgesaugt, mit gesättigter Kaliumchloridlösung neutral gewaschen und bei 80°C getrocknet.
Der erhaltene Rückstand wird nun bei 25°C zunächst in 1300 g 100 %ige Schwefelsäure eingebracht und gelöst. Danach werden dieser Lösung noch 1070 g 50 %ige Schwefelsäure tropfenweise zugefügt, wobei die Temperatur bis 80°C ansteigen darf. Anschließend läßt man auf 25°C abkühlen; die so freigesetzte Sulfonsäure wird über eine Glasfritte abgesaugt, mit 78 %iger Schwefelsäure nachgewaschen, durch

Behandlung mit 31 %iger Salzsäure sulfatfrei gewaschen und im Vakuum bei 80 °C getrocknet.

Ausbeute: 38,4 g einer Verbindung mit der oben genannten Formel IV, die 4,6 % Kristallwasser enthält, entprechend 36,6 g 100 %ig (= 73,5 % d. Th.).

Analyse: $C_{26}H_{14}N_2SO_7$

Unter Berücksichtigung von 4,6 % $H_2O$

| | | | | |
|---|---|---|---|---|
| Ber.: | C 62,7 %; | H 2,8 %; | N 5,6 %; | S 6,4 % |
| Gef.: | C 63,3 %; | H 2,6 %; | N 5,7 %; | S 6,1 % |

**Beispiel 3**

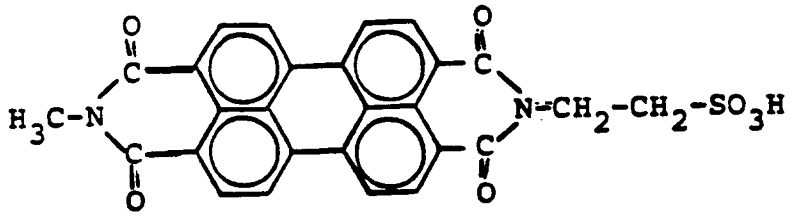

(V)

In einem Autoklaven werden 1200 ml Wasser vorgelegt und darin werden 50,1 g Taurin gelöst. Durch weitere Zugabe von 26,4 g Kaliumhydroxid (85 %ig) wird in dieser Lösung ein pH-Wert von 9,6 eingestellt. Daraufhin trägt man in die Vorlage 40,5 g Perylen-3,4,9,10-tetracarbonsäure-monoanhydrid-N-monomethylimid ein und der Ansatz wird dann 3 Stunden bei 150 °C nachgerührt. Nach Abkühlen auf 25 °C wird das als K-Salz gebildete Umsetzungsprodukt abgesaugt, mit Wasser nachgewaschen und bei 80 °C getrocknet. Der erhaltene Rückstand wird nun bei 25 °C zunächst in 1000 g 100 %ige Schwefelsäure eingebracht und gelöst. Danach werden dieser Lösung noch 850 g 50 %ige Schwefelsäure tropfenweise zugefügt, wobei die Temperatur bis 80 °C ansteigen darf. Anschließend läßt man auf 25 °C abkühlen; die so freigesetzte Sulfonsäure wird über eine Glasfritte abgesaugt, mit 78 %iger Schwefelsäure nachgewaschen, durch Behandlung mit 31 %iger Salzsäure sulfatfrei gewaschen und im Vakuum bei 80 °C getrocknet.

Ausbeute: 44,9 g einer Verbindung mit der oben genannten Formel V, die 1,9 % Kristallwasser enthält, entsprechend 44,0 g 100 %ig (= 85,9 % d. Th.).

Analyse: $C_{27}H_{16}N_2SO_7$

Unter Berücksichtung von 1,9 % $H_2O$

| | | | | |
|---|---|---|---|---|
| Ber.: | C 63,3 %; | H 3,1 %; | N 5,5 %; | S 6,3 % |
| Gef.: | C 63,0 %; | H 3,4 %; | N 5,4 %; | S 6,3 % |

**Beispiele 3a bis 3j**

Die Perylenverbindung mit der Formel V wurde in einer Reihe von Fällen als Pigmentdispergator in unterschiedlichen Mengen verschiedenen Pigmenten zugesetzt, mechanisch gemischt und die dabei erhaltenen Pigmentzubereitungen sind danach im TSA/NAD-Lack bzw. AM6-Lack gegen das jeweilige Basis-Pigment ausgeprüft worden. Die hierbei erzielten anwendungstechnischen Ergebnisse werden in der nachfolgenden Zusammenstellung aufgelistet:

| Beispiel | Basis-Pigment | Zusatz-menge | Lacksystem | Glanz gegossen | Millbase-Rheologie | Vollton | Aufhellung |
|---|---|---|---|---|---|---|---|
| 3a | C.I.Pigment Red 179 (Nr. 71130) Perylen-Typ | ohne | TSA/NAD | 95 | 1 | | |
| | hergest. nach EP-PS 0 088 392 | 5 % | TSA/NAD | 99 | 4-5 | etwa gleich | etwas farbstärker |
| | | 10 % | TSA/NAD | 100 | 5 | merklich transparenter | merklich farbstärker |
| 3b | C.I.Pigment Red 179 (Nr. 71130) Perylen-Typ | ohne | TSA/NAD | 85 | 5 | | |
| | hergest. nach EP-PS 0 318 022 | 5 % | TSA/NAD | 86 | 5 | wenig transparenter | etwas farbstärker |
| 3c | C.I.Pigment Red 179 (Nr. 71130) Perylen-Typ | ohne | AM6 | 89 | 4-5 | | |
| | hergest. nach EP-PS 0 318 022 | 5 % | AM6 | 89 | 5 | wenig transparenter | etwas farbstärker |
| 3d | C.I.Pigment Red 224 (Nr. 71127) Perylen-Typ | ohne | TSA/NAD | 89 | 5 | | |
| | | 5 % | TSA/NAD | 99 | 5 | merklich transparenter, merklich dunkler | merklich farbstärker |
| 3e | C.I.Pigment Red 149 (Nr. 71137) Perylen-Typ | ohne | TSA/NAD | 35 | 3 | | |
| | | 5 % | TSA/NAD | 63 | 2 | merklich transparenter, merklich dunkler | merklich farbstärker |

| Beispiel | Basis-Pigment | Zusatz-menge | Lacksystem | Glanz gegossen | Millbase-Rheologie | Vollton | Aufhellung |
|---|---|---|---|---|---|---|---|
| 3f | C.I.Pigment Red 122 (Nr. 73915) Chinacridon-Typ | ohne | TSA/NAD | 13 | 3 | | |
| | hergest. nach EP-PS 0 318 022 | 5 % | TSA/NAD | 89 | 5 | deutlich transparenter, merklich dunkler | deutlich farbstärker |
| 3g | C.I.Pigment Violet 19 (Nr. 73900) Chinacridon-Typ | ohne | TSA/NAD | 74 | 4-5 | | |
| | | 5 % | TSA/NAD | 74 | 5 | merklich transparenter, etwas dunkler | merklich farbstärker |
| 3h | C.I.Pigment Red 187 (Nr. 12486) Naphthol AS-Typ | ohne | TSA/NAD | 23 | 4-5 | | |
| | | 10 % | TSA/NAD | 94 | 5 | merklich transparenter, merklich dunkler | deutlich farbstärker |
| 3i | C.I.Pigment Violet 32 (Nr. 12517) Benzimidazolon-Typ | ohne | TSA/NAD | 62 | 4-5 | | |
| | | 10 % | TSA/NAD | 78 | 5 | etwas transparenter, etwas dunkler | deutlich farbstärker |
| 3j | C.I.Pigment Red 171 (Nr. 12512) Benzimidazolon-Typ | ohne | TSA/NAD | 79 | 4 | | |
| | | 10 % | TSA/NAS | 86 | 5 | merklich transparenter, etwas heller | deutlich farbstärker |

**Beispiel 4**

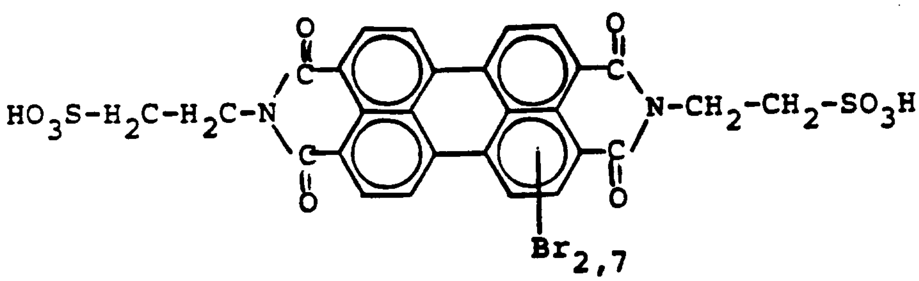

(VI)

15,2 g Perylen-3,4,9,10-tetracarbonsäure-N,N'-bis-(2'-sulfoethylimid) der Formel III (93,8 %ig), hergestellt gemäß Beispiel 1, werden unter Rühren bei 25 °C in 450 g 100 %ige Schwefelsäure eingetragen und gelöst. Dieser Lösung werden sodann 6,0 g Brom und 0,2 g Jod zugefügt. Anschließend wird das Bromierungsgemisch noch 6 Stunden bei 125 °C nachgerührt, man läßt nun auf 25 °C abkühlen und tropft bei dieser Temperatur 500 g 30 %ige Schwefelsäure hinzu. Das hierbei ausgefallene Umsetzungsprodukt wird über eine Glasfritte abgesaugt, mit 60 %iger Schwefelsäure nachgewaschen, durch Behandlung mit 31 %iger Salzsäure sulfatfrei gewaschen und bei 80 °C im Vakuum getrocknet.

Ausbeute: 17,7 g einer Verbindung mit der oben genannten Formel VI, die 4,5 % Kristallwasser enthält, entsprechend 16,9 g 100 %ig ( = 87,8 % d. Th.).

Analyse: $C_{28}H_{15,3}N_2S_2O_{10}Br_{2,7}$
Unter Berücksichtigung von 4,5 % $H_2O$

| | | | | | |
|---|---|---|---|---|---|
| Ber.: | C 40,7 %; | H 1,9 %; | N 3,3 %; | Br 26,4 %; | S 6,8 % |
| Gef.: | C 41,0 %; | H 1,9 %; | N 3,4 %; | Br 26,3 %; | S 7,8 % |

Bei der Ausprüfung des Produktes in der Papiertauchfärbung werden rote, farbstarke Ausfärbungen erhalten. Die Ausfärbungen im Nitrolack sind rot, farbstark und fluoreszierend.

**Beispiel 5**

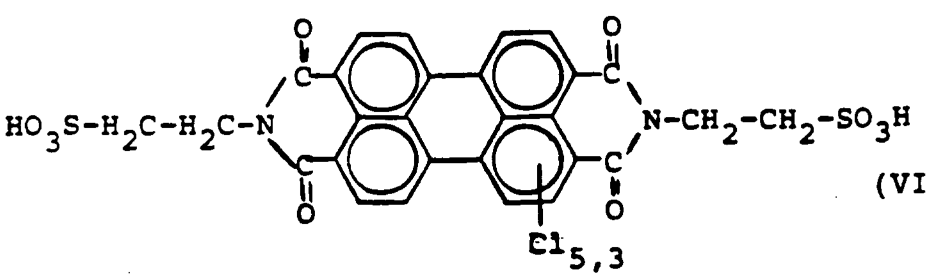

(VII)

31,4 g Perylen-3,4,9,10-tetracarbonsäure-N,N'-bis-(2'-sulfoethylimid) der Formel III (93,8 %ig), hergestellt gemäß Beispiel 1, werden unter Rühren in 402 g 100 %ige Schwefelsäure eingetragen und gelöst. Nachdem man in diese Lösung 0,6 g Natriumjodid zugegeben hat, werden 'nun innerhalb von 12 Stunden 70 g Chlor bei 20 - 25 °C eingeleitet, wobei man jeweils im Abstand von 3 Stunden weitere 0,6 g Natriumjodid nachsetzt. Daraufhin werden dem Chlorierungsgemisch bei 20 - 25 °C tropfenweise noch 560 g 20 %ige Schwefelsäure zugefügt. Das hierbei ausgefallene Umsetzungsprodukt wird über eine Glasfritte abgesaugt, mit 50 %iger Schwefelsäure nachgewaschen, durch Behandlung mit 31 %iger Salzsäure sulfatfrei gewaschen und bei 80 °C im Vakuumschrank getrocknet.

Ausbeute: 34,3 g einer Verbindung mit der oben genannten Formel VII, die 3,0 % Kristallwasser enthält, entsprechend 33,3 g 100 %ig ( = 86,8 % d. Th.).

Analyse: $C_{28}H_{12,7}N_2S_2O_{10}Cl_{5,3}$
Unter Berücksichtigung von 3,0 % $H_2O$

| | | | | | |
|---|---|---|---|---|---|
| Ber.: | C 42,6 %; | H 1,6 %; | N 3,6 %; | Cl 23,9 %; | S 8,1 % |
| Gef.: | C 42,4 %; | H 2,3 %; | N 3,1 %; | Cl 23,9 %; | S 7,9 % |

Bei der Ausprüfung des Produktes in der Papiertauchfärbung werden orange, farbstarke Ausfärbungen erhalten. Die Ausfärbungen im Nitrolack sind orange, farbstark und fluoreszierend.

**Beispiel 6**

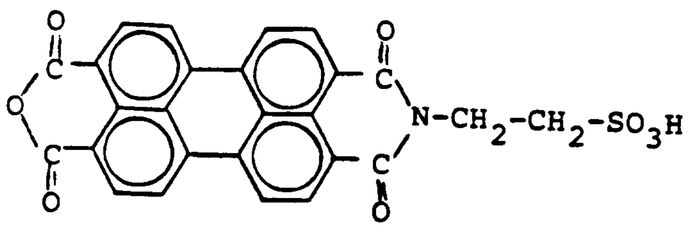

(VIII)

In einem Rührgefäß werden 1200 ml Wasser vorgelegt und darin werden 101 g Taurin und 52,8 g Kaliumhydroxid (85 %ig) gelöst. Die hergestellte Lösung wird auf 0 - 5 °C abgekühlt und bei dieser Temperatur werden 90,1 g Perylen-3,4,9,10-tetracarbonsäure-monoanhydrid-monokaliumsalz eingetragen, worauf der Ansatz zunächst 2 Stunden bei 20 - 25 °C und dann weitere 3 Stunden bei 90 - 95 °C nachgerührt wird. Anschließend läßt man die Reaktionsmischung auf 20 - 25 °C abkühlen, letztere wird abgesaugt und der Filterrückstand wird mit 100 ml Wasser ausgewaschen. In das resultierende Filtrat werden jetzt 125 g Methanol sowie 300 g Kaliumacetat (wasserfrei) gegeben und danach wird die Flüssigkeit 2 Stunden bei 20 - 25 °C gerührt. Das hierbei ausgefallene Umsetzungsprodukt wird abgesaugt, mit einer wäßrig-methanolischen Lösung aus 18 % Kaliumacetat und 6 % Methanol nachgewaschen und bei 80 °C getrocknet.
Die als Trikaliumsalz isolierte Verbindung der Formel VIII wird nun bei 20 - 25 °C zunächst in 1230 g Schwefelsäuremonohydrat eingebracht und gelöst. Daraufhin werden in diese Lösung noch 820 g 50 %ige Schwefelsäure tropfenweise zugefügt, wobei die Temperatur bis 80 °C ansteigen darf. Nachdem man zuvor auf 25 °C abgekühlt hat, wird die so freigesetzte Sulfonsäure über eine Glasfritte abgesaugt, mit 80 %iger Schwefelsäure nachgewaschen, durch Behandlung mit 31 % Salzsäure sulfatfrei gewaschen und im Vakuum bei 80 °C getrocknet.
Ausbeute: 71,2 g einer Verbindung mit der oben genannten Formel VIII, die 6,1 % Kristallwasser enthält, entsprechend 66,9 g 100 %ig (= 66,7 % d. Th.).
Analyse: $C_{26}H_{13}NSO_8$
Unter Berücksichtigung von 6,1 % $H_2O$

| | | | | |
|---|---|---|---|---|
| Ber.: | C 62,5 %; | H 2,6 %; | N 2,8 %; | S 6,4 % |
| Gef.: | C 63,2 %; | H 2,6 %; | N 2,8 %; | S 6,3 % |

**Beispiel 7**

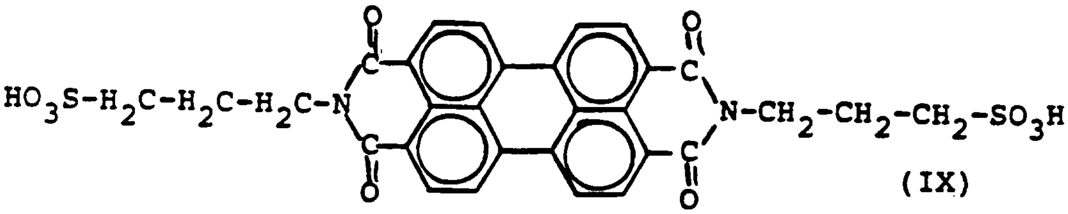

(IX)

In einem Autoklaven werden 9,8 g Perylen-3,4,9,10-tetracarbonsäure-dianhydrid in 290 ml Wasser suspendiert. Zu dieser Suspension werden 13,9 g 3-Aminopropansulfonsäure und 6,6 g Kaliumhydroxid (85 %ig) gegeben, worauf der Ansatz 5 Stunden bei 150 °C gerührt wird. Nach Abkühlen auf 25 °C werden noch 50 g Kaliumchlorid eingetragen, das ausgefallene Umsetzungsprodukt wird abgesaugt, mit 20 %iger Kaliumchloridlösung neutral gewaschen und bei 80 °C getrocknet.
Zur Überführung in die Säureform wird die so als Dikaliumsalz isolierte Verbindung der Formel IX nun bei 25 °C zunächst in 300 g 100 %ige Schwefelsäure eingebracht und gelöst. Danach werden in diese Lösung außerdem 200 g 50 %ige Schwefelsäure tropfenweise zugefügt, wobei die Temperatur bis 80 °C ansteigen darf. Anschließend läßt man auf 25 °C abkühlen, die freigesetzte Sulfonsäure wird dann über eine Glasfritte abgesaugt, mit 80 %iger Schwefelsäure nachgewaschen, durch Behandlung mit 31 %iger Salzsäure sulfatfrei gewaschen und im Vakuum bei 80 °C getrocknet.
Ausbeute: 14,9 g einer Verbindung mit der oben genannten Formel IX, die 5,4 % Kristallwasser enthält, entsprechend 14,1 g 100 %ig (= 89,0 % d. Th.).
Analyse: $C_{30}H_{22}N_2S_2O_{10}$
Unter Berücksichtigung von 5,4 % $H_2O$

| | | | | |
|---|---|---|---|---|
| Ber.: | C 56,8 %; | H 3,5 %; | N 4,4 %; | S 10,1 % |
| Gef.: | C 56,9 %; | H 3,5 %; | N 4,2 %; | S 9,9 % |

**Beispiel 8**

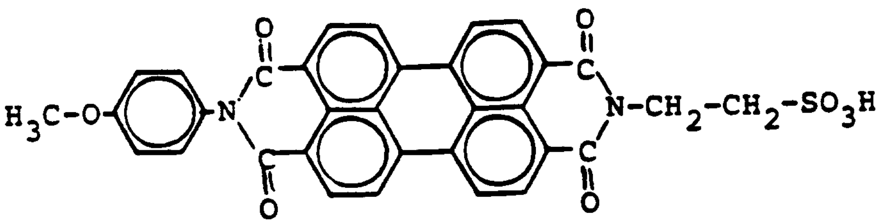

(X),

In einem Rührgefäß werden 50 ml Chinolin vorgelegt und dann werden nacheinander 4,99 g Perylen-3,4,9,10-tetracarbonsäure-monoanhydrid-N-mono-(2'-sulfoethylimid) der Formel VIII (93,9 %ig), hergestellt gemäß Beispiel 6, sowie 4,92 g 4-Methoxyanilin und 0,5 g Zinkacetat-dihydrat eingetragen. Danach wird der Ansatz auf 190 °C erhitzt und 8 Stunden bei dieser Temperatur gerührt. Anschließend läßt man auf 120 °C abkühlen, das als Zn-Salz ausgefallene Umsetzungsprodukt wird bei dieser Temperatur abgesaugt, mit Chinolin und Methanol nachgewaschen und bei 80 °C getrocknet. Der trockene Rückstand wird nun bei 25 °C in 65 g 50 %ige Schwefelsäure eingebracht und daraufhin 5 Stunden bei 25 °C nachgerührt. Die auf diese Weise freigesetzte Sulfonsäure wird schließlich über eine Glasfritte abgesaugt, durch Behandlung mit 31 %iger Salzsäure sulfatfrei gewaschen und bei 80 °C im Vakuum getrocknet.
Ausbeute: 5,79 g einer Verbindung mit der oben genannten Formel X, die 4,3 % Kristallwasser enthält, entsprechend 5,54 g 100 %ig (= 97,9 % d. Th.).

Analyse: $C_{33}H_{20}N_2SO_8$
Unter Berücksichtigung von 4,3 % $H_2O$

| | | | | |
|---|---|---|---|---|
| Ber.: | C 65,6 %; | H 3,3 %; | N 4,6 %; | S 5,3 % |
| Gef.: | C 64,9 %; | H 3,2 %; | N 4,6 %; | S 5,3 % |

**Beispiel 9**

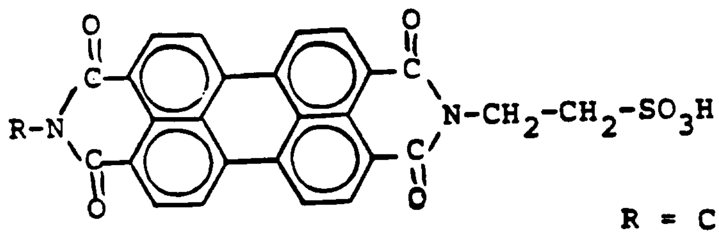

(XI)

R = $C_{14}$-$C_{18}$-Alkyl (natürliche Mischung)

In einem Rührgefäß werden 50 ml Chinolin vorgelegt und dann werden nacheinander 4,99 g Perylen-3,4,9,10-tetracarbonsäure-monoanhydrid-N-mono-(2'-sulfoethylimid) der Formel VIII (93,9 %ig), hergestellt gemäß Beispiel 6, sowie 21,6 g eines $C_{14}$-$C_{18}$-Alkylamins (natürliche Mischung) und 0,5 g Zinkacetat-dihydrat eingetragen. Danach wird der Ansatz auf 190 °C erhitzt und 8 Stunden bei dieser Temperatur gerührt. Anschließend läßt man auf 120 °C abkühlen, das als Zn-Salz entstandene Umsetzungsprodukt wird bei dieser Temperatur abgesaugt, mit Chinolin und Methanol nachgewaschen und bei 80 °C getrocknet.
Der trockene Rückstand wird nun bei 25 °C zunächst in 80 g 100 %ige Schwefelsäure eingebracht und gelöst. Daraufhin werden in diese Lösung noch 52 g 50 %ige Schwefelsäure tropfenweise zugefügt, wobei die Temperatur bis 80 °C ansteigen darf. Nachdem die Reaktionsmischung zuvor auf 25 °C abgekühlt worden ist, gießt man dieselbe in 800 ml Wasser. Das hierbei ausgefallene Verfahrenserzeugnis wird abgesaugt und durch Behandlung mit Wasser sulfatfrei gewaschen. Der resultierende feuchte Preßkuchen wird sodann in eine Mischung aus 100 ml Ethanol und 5,6 g Salzsäure (31 %ig) eingebracht und 1 Stunde bei Siedetemperatur ausgerührt. Zuletzt wird die auf diese Weise freigesetzte Sulfonsäure über eine Glasfritte abgesaugt, mit Ethanol gewaschen und bei 80 °C getrocknet.
Ausbeute: 6,80 g einer Verbindung mit der oben genannten Formel XI, die 0,53 % Kristallwasser enthält, entsprechend 6,76 g trocken.
Analyse:
Unter Berücksichtigung von 0,53 % $H_2O$

| | | | | |
|---|---|---|---|---|
| Gef.: | C 71,7 %; | H 7,9 %; | N 4,1 %; | S 3,8 % |

**Beispiel 10**

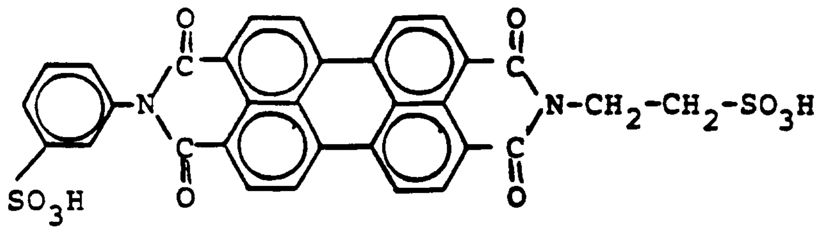

(XII)

In einem Rührgefäß werden 50 ml Chinolin vorgelegt und dann werden nacheinander 4,99 g Perylen-3,4,9,10-tetracarbonsäure-monoanhydrid-N-mono-(2'-sulfoethylimid) der Formel VIII (93,9 %ig) hergestellt gemäß Beispiel 6, sowie 6,92 g Metanilsäure und 0,5 g Zinkacetat-dihydrat eingetragen. Danach wird der Ansatz auf 190 °C erhitzt und 8 Stunden bei dieser Temperatur gerührt. Anschließend läßt man auf 120 °C abkühlen, das als Zn-Salz ausgefallene Umsetzungsprodukt wird bei dieser Temperatur abgesaugt, mit Chinolin und Methanol nachgewaschen und bei 80 °C getrocknet.
Der trockene Rückstand wird nun bei 25 °C in 86 g 50 %ige Schwefelsäure eingebracht und daraufhin 4 Stunden bei 25 °C nachgerührt. Die auf diese Weise freigesetzte Sulfonsäure wird schließlich über eine Glasfritte abgesaugt, durch Behandlung mit 31 %iger Salzsäure sulfatfrei gewaschen und bei 80 °C im Vakuum getrocknet.
Ausbeute: 6,26 g einer Verbindung mit der oben genannten Formel XII, die 4,4 % Kristallwasser enthält, entsprechend 5,98 g 100 %ig ( = 97,2 % d. Th.).
Analyse: $C_{32}H_{18}N_2S_2O_{10}$
Unter Berücksichtigung von 4,4 % $H_2O$

| | | | | |
|---|---|---|---|---|
| Ber.: | C 58,7 %; | H 2,8 %; | N 4,3 %; | S 9,8 % |
| Gef.: | C 57,2 %; | H 3,1 %; | N 4,3 %; | S 9,3 % |

**Beispiel 11**

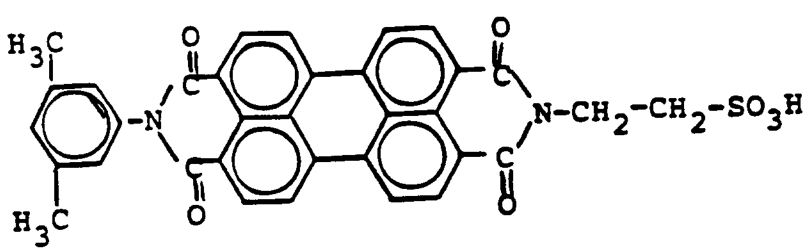

(XIII)

In ein Rührgefäß werden nacheinander 50 ml symmetrisches Xylidin, 4,99 g Perylen-3,4,9,10-tetracarbonsäure-monoanhydrid-N-mono-(2'-sulfoethylimid) der Formel VIII (93,9 %ig), hergestellt gemäß Beispiel 6, und 0,5 g Zinkacetat-dihydrat eingetragen. Daraufhin wird der Ansatz auf 205 - 210 °C erhitzt und 8 Stunden bei dieser Temperatur nachgerührt. Anschließend läßt man auf 25 °C abkühlen, das als Zn-Salz gebildete Umsetzungsprodukt wird abgesaugt, mit symmetrischem Xylidin und Methanol nachgewaschen und bei 80 °C getrocknet.
Der trockene Rückstand wird nun bei 25 °C in 63 g 50 %ige Schwefelsäure eingebracht und sodann 1 Stunde bei 25 °C nachgerührt. Die auf diese Weise freigesetzte Sulfonsäure wird schließlich über eine Glasfritte abgesaugt, durch Behandlung mit 31 %iger Salzsäure sulfatfrei gewaschen und bei 80 °C im Vakuum getrocknet.
Ausbeute: 5,75 g einer Verbindung mit der oben genannten Formel XIII, die 3,1 % Kristallwasser enthält, entsprechend 5,57 g 100 %ig ( = 98,4 % d. Th.).

Analyse: $C_{34}H_{22}N_2O_7S$
Unter Berücksichtigung von 3,1 % $H_2O$

| | | | | |
|---|---|---|---|---|
| Ber.: | C 67,8 %; | H 3,7 %; | N 4,7 %; | S 5,3 % |
| Gef.: | C 68,2 %; | H 3,8 %; | N 5,1 %; | S 5,1 % |

## Patentansprüche

**1.** Sulfonsäuregruppenhaltige Perylenverbindungen der allgemeinen Formel I

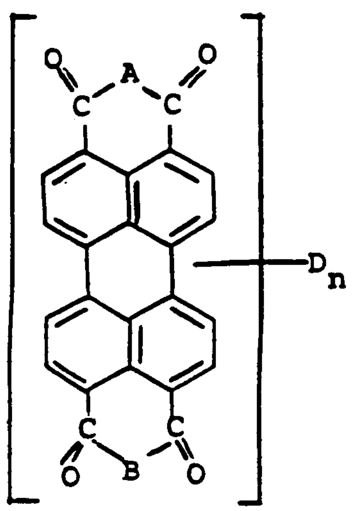

(I),

in welcher

A einen bivalenten Rest -O-, >$NR^1$ oder >$N\text{-}R^2\text{-}SO_3^-X^+$ und

B den bivalenten Rest >$N\text{-}R^2\text{-}SO_3^-X^+$ bedeutet,

D ein Chlor- oder Bromatom und sofern n > 1 ggf. eine Kombination davon darstellt, und

n eine Zahl von 0 bis 8 ist;

wobei in den obigen Resten A und B dann

$R^1$ für ein Wasserstoffatom oder eine $C_1$-$C_{30}$-Alkylgruppe oder für eine Arylgruppe steht, die unsubstituiert oder durch Halogen, Sulfo, $C_1$-$C_4$-Alkyl, $C_1$-$C_4$-Alkoxy oder Phenylazo ein- oder mehrfach substituiert sein kann,

$R^2$ für eine geradkettige oder verzweigte $C_1$-$C_6$-Alkylengruppe steht, und

$X^+$ das Hydron $H^+$ oder das Äquivalent

$$\frac{M^{m+}}{m}$$

eines Metallkations aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 ist;
oder ein Ammoniumion $N^+R^3R^4R^5R^6$ definiert, wobei die Substituenten $R^3$, $R^4$, $R^5$ und $R^6$ am quartären N-Atom unabhängig voneinander jeweils ein Wasserstoffatom oder eine Gruppe aus der Reihe $C_1$-$C_{30}$-Alkyl, $C_1$-$C_{30}$-Alkenyl, $C_5$-$C_{30}$-Cycloalkyl, unsubstituiertes oder durch $C_1$-$C_8$-alkyliertes Phenyl oder eine (Poly)alkylenoxygruppe

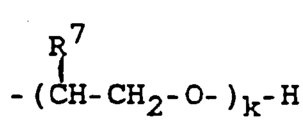

sind, in der $R^7$ für Wasserstoff oder $C_1$-$C_4$-Alkyl steht und k eine Zahl von 1 bis 30 ist, und in denen ggf. als $R^3$, $R^4$, $R^5$ und/oder $R^6$ ausgewiesenes Alkyl, Alkenyl, Cycloalkyl, Phenyl oder Alkylphenyl außerdem durch Amino, Hydroxy und/oder Carboxy substituiert sein können; oder wobei die Substituenten $R^3$ und $R^4$ zusammen mit dem quartären N-Atom ein fünf- bis siebengliedriges gesättigtes Ringsystem, das ggf. noch weitere Heteroatome enthält, bilden können;
oder wobei die Substituenten $R^3$, $R^4$ und $R^5$ zusammen mit dem quartären N-Atom ein fünf- bis siebengliedriges aromatisches Ringsystem, das ggf. noch weitere Heteroatome enthält und an dem ggf. zusätzliche Ringe ankondensiert sind, bilden können mit Ausnahme der Verbindung, worin n die Zahl Null und A und B jeweils $>N-CH_2-CH_2-SO_3H$ bedeuten.

**2.** Sulfonsäuregruppenhaltige Perylenverbindungen gemäß Anspruch 1, dadurch gekennzeichnet, daß in der dort angegebenen allgemeinen Formel I
A und B identisch sind und jeweils den bivalenten Rest $>N-R^2-SO_3^-X^+$ bedeuten sowie
D und n wie in Anspruch 1 definiert sind,
wobei in den obigen Resten A und B dann
$R^2$ für Ethylen oder Propylen steht, und
$X^+$ das Hydron $H^+$ oder das Äquivalent

$$\frac{M^{m+}}{m}$$

eines Metallkations wie in Anspruch 1 aus der Reihe $Li^{1+}$, $Na^{1+}$, $K^{1+}$, $Mg^{2+}$, $Ca^{2+}$, $Sr^{2+}$, $Ba^{2+}$, $Mn^{2+}$, $Cu^{2+}$, $Ni^{2+}$, $Cd^{2+}$, $Co^{2+}$, $Zn^{2+}$, $Fe^{2+}$, $Al^{3+}$, $Cr^{3+}$ oder $Fe^{3+}$;
oder ein Ammoniumion $N^+R^3R^4R^5R^6$ darstellt, in dem die Substituenten $R^3$, $R^4$, und $R^5$ am quartären N-Atom unabhängig voneinander jeweils ein Wasserstoffatom oder die Gruppe $C_2$-$C_3$-Hydroxyalkyl, und $R^6$ eine der Gruppen aus der Reihe $C_1$-$C_{30}$-Alkyl, $C_1$-$C_{30}$-Alkenyl, $C_2$-$C_3$-Hydroxyalkyl oder $C_5$-$C_6$-Cycloalkyl sind.

**3.** Sulfonsäuregruppenhaltige Perylenverbindungen gemäß Anspruch 1, dadurch gekennzeichnet, daß in der dort angegebenen allgemeinen Formel I
A einen bivalenten Rest -O- oder $>N-R^1$ und
B den bivalenten Rest $>N-R^2-SO_3^-X^+$ bedeutet sowie
D und n wie in Anspruch 1 definiert sind,
wobei in den obigen Resten A und B dann
$R^1$ für ein Wasserstoffatom oder eine $C_1$-$C_{18}$-Alkylgruppe oder für eine Phenylgruppe steht, die unsubstituiert oder durch Chlor, Sulfo, Brom, Methyl, Ethyl, Methoxy und/oder Ethoxy substituiert sein kann,
$R^2$ für Ethylen oder Propylen steht, und
$X^+$ das Hydron $H^+$ oder das Äquivalent

$$\frac{M^{m+}}{m}$$

eines Metallkations wie in Anspruch 1 aus der Reihe $Li^{1+}$, $Na^{1+}$, $K^{1+}$, $Mg^{2+}$, $Ca^{2+}$, $Sr^{2+}$, $Ba^{2+}$, $Mn^{2+}$, $Cu^{2+}$, $Ni^{2+}$, $Cd^{2+}$, $Co^{2+}$, $Zn^{2+}$, $Fe^{2+}$, $Al^{3+}$, $Cr^{3+}$ oder $Fe^{3+}$;
oder ein Ammoniumion $N^+R^3R^4R^5R^6$ darstellt, in dem die Substituenten $R^3$, $R^4$, und $R^5$ am quartären N-Atom unabhängig voneinander jeweils ein Wasserstoffatom oder die Gruppe $C_2$-$C_3$-Hydroxyalkyl, und $R^6$ eine der Gruppen aus der Reihe $C_1$-$C_{30}$-Alkyl, $C_1$-$C_{30}$-Alkenyl, $C_2$-$C_3$-Hydroxyalkyl oder $C_5$-$C_6$-Cycloalkyl sind.

**4.** Sulfonsäuregruppenhaltige Perylenverbindungen gemäß einem oder mehreren der Ansprüche 1 bis 3, dadurch gekennzeichnet, daß in der dort angegebenen allgemeinen Formel I
A einen bivalenten Rest -O-, $>NR^1$ oder $>N-CH_2-CH_2-SO_3^-X^+$ und
B den bivalenten Rest $>N-CH_2-CH_2-SO_3^-X^+$ bedeutet sowie
n die Zahl 0 ist,

wobei in den obigen Resten A und B dann

$R^1$ für Wasserstoff oder $C_1$-$C_4$-Alkyl steht und

$X^+$ das Kation $H^+$ oder

$$\frac{Ca^{2+}}{2}$$

oder ein Ammoniumion $N^+H_3R^6$ darstellt, in dem $R^6$ wie in den Ansprüchen 2 oder 3 definiert ist.

**5.** Verfahren zur Herstellung von sulfonsäuregruppenhaltigen Perylenverbindungen der allgemeinen Formel I gemäß einem oder mehreren der Ansprüche 1 bis 4, dadurch gekennzeichnet, daß man Perylen-3,4,9,10-tetracarbonsäure-monoanhydrid-monoalkalisalz,
Perylen-3,4,9,10-tetracarbonsäure-monoanhydrid-monoimide, oder
Perylen-3,4,9,10-tetracarbonsäure-dianhydrid mit sulfonsäuregruppenhaltigen, primären aliphatischen Aminen der allgemeinen Formel II

$H_2N$-$R^2$-$SO_3^-X^+$ (II),

in der $R^2$ und $X^+$ die im Anspruch 1 angegebene Bedeutung besitzen, in wäßriger Lösung, vorzugsweise unter alkalischen pH-Bedingungen, bei Temperaturen im Bereich zwischen 50 °C und 180 °C umsetzt.

**6.** Verfahren zur Herstellung von mono- und disulfonsäuregruppenhaltigen Perylenverbindungen der allgemeinen Formel I gemäß einem oder mehreren der Ansprüche 1 bis 4, dadurch gekennzeichnet, daß man Perylen-3,4,9,10-tetracarbonsäure-monoanhydrid-monoalkalisalz,
Perylen-3,4,9,10-tetracarbonsäure-monoanhydrid-monoimide, oder
Perylen-3,4,9,10-tetracarbonsäure-dianhydrid
mit sulfonsäuregruppenhaltigen, primären aliphatischen Aminen der allgemeinen Formel II

$H_2N$-$R^2$-$SO_3^-X^+$ (II),

in der $R^2$ und $X^+$ die im Anspruch 1 angegebene Bedeutung besitzen, in hochsiedenden, inerten organischen Lösemitteln bei Temperaturen > 100 °C, bevorzugt im Bereich zwischen 180 °C und 230 °C, gegebenenfalls in Gegenwart von Katalysatoren umsetzt.

**7.** Verfahren gemäß einem der Ansprüche 5 oder 6, dadurch gekennzeichnet, daß man in Salzform als Sulfonat angefallene Reaktionsprodukte der Formel I, zweckmäßig nach erfolgter Zwischenisolierung, durch Behandlung mit starken Mineralsäuren in die entsprechenden freien Sulfonsäuren der Formel I überführt.

**8.** Verwendung der gemäß einem oder mehreren der Ansprüche 1 bis 4 definierten, sulfonsäuregruppenhaltigen Perylenverbindungen der Formel I als Pigmentdispergatoren zur Herstellung von Pigmentzubereitungen.

**9.** Verwendung von Pigmentzubereitungen gemäß Anspruch 8, deren Basispigment sich von der dem eingesetzten Dispergator zugrundeliegenden Perylen-Verbindungsklasse oder einem Derivat davon ableitet.

**10.** Verwendung von Pigmentzubereitungen gemäß Anspruch 8, deren Basispigment sich von einer dem eingesetzten Dispergator unterschiedlichen chemischen Verbindungsklasse ableitet.

**11.** Verwendung von gemäß einem oder mehreren der Ansprüche 8 bis 10 definierten Pigmentzubereitungen als Farbmittel zum Pigmentieren von hochmolekularen organischen Materialien natürlicher oder synthetischer Herkunft in Form plastischer Massen, Schmelzen, Spinnlösungen, Lacken, Anstrichfarben oder Druckfarben.

**12.** Verwendung von gemäß einem oder mehreren der Ansprüche 1 bis 4 definierten, leichtlöslichen sulfonsäuregruppenhaltigen Perylenverbindungen der Formel I als Fluoreszenzfarbstoffe.

**13.** Verwendung der Fluoreszenzfarbstoffe gemäß Anspruch 12 zum Färben von wäßrigen oder wäßrig-organischen Medien sowie von flüssigen oder festen organischen Stoffen.

**14.** Verwendung von gemäß einem oder mehreren der Ansprüche 1 bis 4 definierten, schwerlöslichen Perylenverbindungen der Formel I, insbesondere der Salze zwei- oder mehrwertiger Metallkationen, als Farbmittel zum Pigmentieren von hochmolekularen organischen Materialien natürlicher oder synthetischer Herkunft.

**15.** Perylenverbindung der Formel V

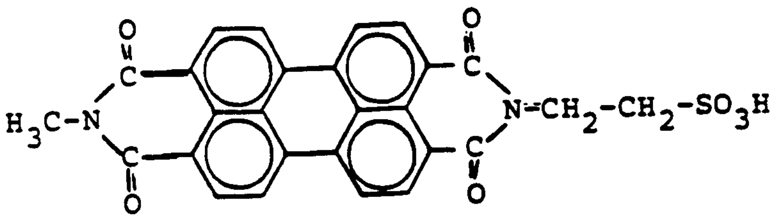

(V)

## Claims

**1.** A perylene compound, containing sulfonic acid groups, of the formula I

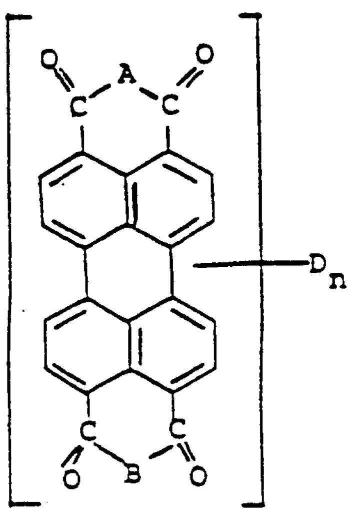

(I)

in which

- A is a bivalent radical -O-, >$NR^1$ or >$N-R^2-SO_3^-X^+$ and
- B is the bivalent radical >$N-R^2-SO_3^-X^+$,
- D is a chlorine or bromine atom and, if $n > 1$, optionally a combination thereof, and
- n is a number from 0 to 8;

in which, in the above radicals A and B,

- $R^1$ is a hydrogen atom or a $C_1$-$C_{30}$-alkyl group or an aryl group, which can be unsubstituted or mono- or polysubstituted by halogen, sulfo, $C_1$-$C_4$-alkyl, $C_1$-$C_4$-alkoxy or phenylazo,
- $R^2$ is a straight-chain or branched $C_1$-$C_6$-alkylene group, and
- $X^+$ is the hydrogen ion $H^+$ or the equivalent $M^{m+}/m$ of a metal cation from main group 1 to 5 or from sub-group 1 or 2 or 4 to 8 of the periodic system of the chemical elements, in which m is one of the numbers 1, 2 and 3; or an ammonium ion $N^+R^3R^4R^5R^6$, in which the

substituents $R^3$, $R^4$, $R^5$ and $R^6$ on the quaternary N atom independently of one another are each a hydrogen atom or a group from the series comprising $C_1$-$C_{30}$-alkyl, $C_1$-$C_{30}$-alkenyl and $C_5$-$C_{30}$-cycloalkyl, unsubstituted or $C_1$-$C_8$-alkylated phenyl or a (poly)alkyleneoxy group

$$-(\overset{R^7}{\overset{|}{C}}H-CH_2-O-)_k-H,$$

in which $R^7$ is hydrogen or $C_1$-$C_4$-alkyl and k is a number from 1 to 30, and in which alkyl, alkenyl, cycloalkyl, phenyl or alkylphenyl identified as $R^3$, $R^4$, $R^5$ and/or $R^6$ can moreover optionally be substituted by amino, hydroxyl and/or carboxyl;
or in which the substituents $R^3$ and $R^4$, together with the quaternary N atom, can form a five- to seven-membered saturated ring system, which optionally also contains further hetero atoms;
or in which the substituents $R^3$, $R^4$ and $R^5$, together with the quaternary N atom, can form a five- to seven-membered aromatic ring system, which optionally also contains further hetero atoms, and to which additional rings are optionally fused, with the exception of the compound in which n is zero and A and B are each $>N-CH_2-CH_2-SO_3H$.

**2.** A perylene compound containing sulfonic acid groups as claimed in claim 1, wherein, in the formula I given therein,

- A and B — are identical and are each the bivalent radical $>N-R^2-SO_3^-X^+$ and
- D and n — are as defined in claim 1,

in which, in the above radicals A and B,

- $R^2$ — is ethylene or propylene and
- $X^+$ — is the hydrogen ion $H^+$ or the equivalent $M^{m+}/m$ of a metal cation as in claim 1 from the series comprising $Li^{1+}$, $Na^{1+}$, $K^{1+}$, $Mg^{2+}$, $Ca^{2+}$, $Sr^{2+}$, $Ba^{2+}$, $Mn^{2+}$, $Cu^{2+}$, $Ni^{2+}$, $Cd^{2+}$, $Co^{2+}$, $Zn^{2+}$, $Fe^{2+}$, $Al^{3+}$, $Cr^{3+}$ and $Fe^{3+}$;
  or an ammonium ion $N^+R^3R^4R^5R^6$, in which the substituents $R^3$, $R^4$ and $R^5$ on the quaternary N atom independently of one another are each a hydrogen atom or the group $C_2$-$C_3$-hydroxyalkyl, and $R^6$ is one of the groups from the series comprising $C_1$-$C_{30}$-alkyl, $C_1$-$C_{30}$-alkenyl, $C_2$-$C_3$-hydroxyalkyl and $C_5$-$C_6$-cycloalkyl.

**3.** A perylene compound containing sulfonic acid groups as claimed in claim 1, wherein, in the formula I given therein,

- A — is a bivalent radical -O- or $>N-R^1$ and
- B — is the bivalent radical $>N-R^2-SO_3^-X^+$ and
- D and n — are as defined in claim 1,

in which, in the above radicals A and B,

- $R^1$ — is a hydrogen atom or a $C_1$-$C_{18}$-alkyl group, or is a phenyl group, which can be unsubstituted or substituted by chlorine, sulfo, bromine, methyl, ethyl, methoxy and/or ethoxy,
- $R^2$ — is ethylene or propylene and
- $X^+$ — is the hydrogen ion $H^+$ or the equivalent $M^{m+}/m$ of a metal cation as in claim 1 from the series comprising $Li^{1+}$, $Na^{1+}$, $K^{1+}$, $Mg^{2+}$, $Ca^{2+}$, $Sr^{2+}$, $Ba^{2+}$, $Mn^{2+}$, $Cu^{2+}$, $Ni^{2+}$, $Cd^{2+}$, $Co^{2+}$, $Zn^{2+}$, $Fe^{2+}$, $Al^{3+}$, $Cr^{3+}$ and $Fe^{3+}$;
  or an ammonium ion $N^+R^3R^4R^5R^6$, in which the substituents $R^3$, $R^4$ and $R^5$ on the quaternary N atom independently of one another are each a hydrogen atom or the group $C_2$-$C_3$-hydroxyalkyl, and $R^6$ is one of the groups from the series comprising $C_1$-$C_{30}$-alkyl, $C_1$-$C_{30}$-alkenyl, $C_2$-$C_3$-hydroxyalkyl and $C_5$-$C_6$-cycloalkyl.

**4.** A perylene compound containing sulfonic acid groups as claimed in one or more of claims 1 to 3, wherein, in the formula I given therein,

- A — is a bivalent radical -O-, $>NR^1$ or $>N-CH_2-CH_2-SO_3^-X^+$ and
- B — is the bivalent radical $>N-CH_2-CH_2-SO_3^-X^+$, and
- n — is the number 0,

in which, in the above radicals A and B,

- $R^1$ — is hydrogen or $C_1$-$C_4$-alkyl and

$X^+$ is the cation $H^+$ or $Ca^{2+}/2$ or an ammonium ion $N^+H_3R^6$,in which $R^6$ is as defined in claim 2 or 3.

**5.** A process for the preparation of a perylene compound, containing sulfonic acid groups, of the formula I as claimed in one or more of claims 1 to 4, which comprises reacting a perylene-3,4,9,10-tetracarboxylic acid monoanhydride mono-alkali metal salt, perylene-3,4,9,10-tetracarboxylic acid monoanhydride monoimide or perylene-3,4,9,10-tetracarboxylic acid dianhydride with a primary aliphatic amine containing sulfonic acid groups, of the formula II

$H_2N\text{-}R^2\text{-}SO_3^-X^+$ (II)

in which $R^2$ and $X^+$ have the meaning given in claim 1, in aqueous solution, preferably under alkaline pH conditions, at temperatures in the range between 50 °C and 180 °C.

**6.** A process for the preparation of a perylene compound, containing one or two sulfonic acid groups, of the formula I as claimed in one or more of claims 1 to 4, which comprises reacting a perylene-3,4,9,10-tetracarboxylic acidmonoanhydride mono-alkali metal salt,
perylene-3,4,9,10-tetracarboxylic acid monoanhydride monoimide or
perylene-3,4,9,10-tetracarboxylic acid dianhydride with a primary aliphatic amine containing sulfonic acid groups, of the formula II

$H_2N\text{-}R^2\text{-}SO_3^-X^+$ (II)

in which $R^2$ and $X^+$ have the meaning given in claim 1, in a high-boiling inert organic solvent at a temperature > 100 °C, preferably in the range between 180 °C and 230 °C, if appropriate in the presence of a catalyst.

**7.** The process as claimed in one of claims 5 and 6, wherein a reaction product of the formula I obtained in the salt form as the sulfonate is converted into the corresponding free sulfonic acid of the formula I by treatment with a strong mineral acid, advantageously after intermediate isolation has been carried out.

**8.** The use of a perylene compound, containing sulfonic acid groups, of the formula I as defined in one or more of claims 1 to 4 as a pigment disperser for the preparation of pigment formulations.

**9.** The use of a pigment formulation as claimed in claim 8, the base pigment of which is derived from the perylene compound class on which the dispersing agent employed is based or a derivative thereof.

**10.** The use of a pigment formulation as claimed in claim 8, the base pigment of which is derived from a chemical compound class different to the dispersing agent employed.

**11.** The use of a pigment formulation as defined in one or more of claims 8 to 10 as a coloring agent for pigmenting high molecular weight organic materials of natural or synthetic origin in the form of plastic compositions, melts, spinning solutions, varnishes, paints or printing inks.

**12.** The use of a readily soluble perylene compound, containing sulfonic acid groups, of the formula I as defined in one or more of claims 1 to 4 as a fluorescent dyestuff.

**13.** The use of a fluorescent dyestuff as claimed in claim 12 for dyeing aqueous or aqueous-organic media and liquid or solid organic substances.

**14.** The use of a sparingly soluble perylene compound of the formula I as defined in one or more of claims 1 to 3, in particular a salt of a di- or polyvalent metal cation, as a coloring agent for pigmenting high molecular weight organic materials of natural or synthetic origin.

**15.** The perylene compound of the formula V

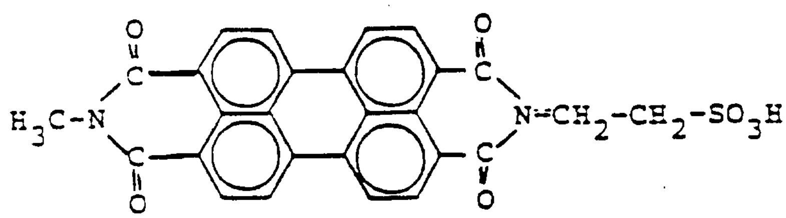

(V) .

## Revendications

**1.** Composés du pérylène à groupes sulfoniques, de formule générale I ci-dessous :

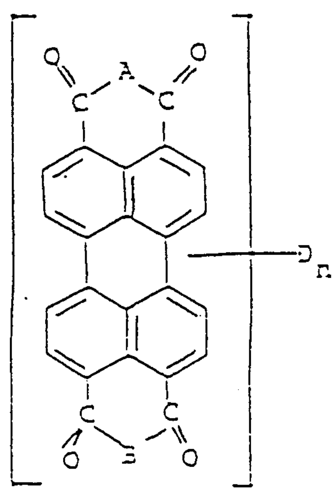

(I),

formule dans laquelle

- A représente un radical bivalent -O-, $>NR^1$ ou $>N\text{-}R^2\text{-}SO_3^-X^+$ et
- B le radical bivalent $>N\text{-}R^2\text{-}SO_3^-X^+$,
- D un atome de chlore ou de brome et, dans la mesure où n est supérieur à 1, éventuellement une combinaison de tels atomes, et
- n est un nombre de 0 à 8 ;

et dans les radicaux A et B ci-dessus :

- $R^1$ représente un atome d'hydrogène, un groupe alkyle en $C_1$-$C_{30}$ ou un groupe aryle qui peut être non substitué ou substitué une ou plusieurs fois par un ou plusieurs substituants pris parmi les suivants : halogènes, groupes sulfoniques, alkyles en $C_1$-$C_4$, alcoxy en $C_1$-$C_4$ et phénylazo,
- $R^2$ représente un groupe alkylène en $C_1$-$C_6$ à chaîne linéaire ou ramifiée, et
- $X^+$ représente le proton $H^+$ ou l'équivalent

$$\frac{M^{m+}}{m}$$

d'un cation de métal des groupes principaux 1 à 5 ou des sous-groupes 1 ou 2 ou 4 à 8 de la classification périodique des éléments, m étant l'un des nombres 1, 2 ou 3 ;

ou bien un ion ammonium $N^+R^3R^4R^5R^6$, où les substituants $R^3$, $R^4$, $R^5$ et $R^6$ sur l'atome d'azote quaternaire peuvent être chacun, indépendamment les uns des autres, un atome d'hydrogène ou un groupe pris parmi les suivants : alkyles en $C_1$-$C_{30}$, alcényles en $C_1$-$C_{30}$,

cycloalkyles en $C_5$-$C_{30}$, phényle non substitué, phényles substitués par des alkyles en $C_1$-$C_8$ et (poly)alkylènoxy

$$-(\overset{R^7}{\overset{|}{C}}H-CH_2-O-)_k-H,$$

où $R^7$ représente l'hydrogène ou un alkyle en $C_1$-$C_4$ et k un nombre de 1 à 30, et dans lesquels éventuellement les alkyles, alcényles, cycloalkyles, phényles ou alkylphényles identifiés en tant que $R^3$, $R^4$, $R^5$ et/ou $R^6$ peuvent être en outre substitués par des groupes amino, hydroxy et/ou carboxy ;
ou bien où les substituants $R^3$ et $R^4$ peuvent former ensemble et avec l'atome d'azote quaternaire un système cyclique pentagonal à heptagonal saturé pouvant éventuellement comporter encore d'autres hétéroatomes ;
ou encore où les substituants $R^3$, $R^4$ et $R^5$ peuvent former ensemble et avec l'atome d'azote quaternaire un système cyclique aromatique pentagonal à heptagonal pouvant éventuellement comporter encore d'autres hétéroatomes et sur lequel éventuellement d'autres cycles sont condensés, à l'exception du composé dans lequel n est zéro et A et B représentent chacun le groupe >N-$CH^2$-$CH^2$-$SO_3H$.

**2.** Composés du pérylène à groupes sulfoniques selon la revendication 1, caractérisés en ce que dans la formule générale I qui y est indiquée :
A et B sont identiques et représentent chacun le radical bivalent >N-$R^2$-$SO_3^-X^+$, et
D et n sont définis comme à la revendication 1,
dans les radicaux A et B ci-dessus :
R2 représente le groupe éthylène ou propylène, et
$X^+$ le proton $H^+$ ou l'équivalent

$$\frac{M^{m+}}{m}$$

d'un cation de métal tel qu'à la revendication 1, pris parmi $Li^{1+}$, $Na^{1+}$, $K^{1+}$, $Mg^{2+}$, $Ca^{2+}$, $Sr^{2+}$, $Ba^{2+}$, $Mn^{2+}$, $Cu^{2+}$, $Ni^{2+}$, $Cd^{2+}$, $Co^{2+}$, $Zn^{2+}$, $Fe^{2+}$, $Al^{3+}$, $Cr^{3+}$ et $Fe^{3+}$;
ou bien représente un ion ammonium $N^+R^3R^4R^5R^6$, dans lequel les substituants $R^3$, $R^4$, et $R^5$ sur l'atome d'azote quaternaire sont chacun, indépendamment les uns des autres, un atome d'hydrogène ou un groupe hydroxyalkyle en $C_2$-$C_3$, et $R^6$ représente l'un des groupes suivants : alkyles en $C_1$-$C_{30}$, alcényles en $C_1$-$C_{30}$, hydroxyalkyles en $C_2$-$C_3$ et cycloalkyles en $C_5$-$C_6$.

**3.** Composés du pérylène à groupes sulfoniques selon la revendication 1, caractérisés en ce que, dans la formule générale I qui y est indiquée :
A représente un radical bivalent -O- ou >N-$R^1$ et
B le radical bivalent >N-$R^2$-$SO_3^-X^+$, et
D et n sont définis comme à la revendication 1,
où dans les radicaux A et B ci-dessus :
R1 représente un atome d'hydrogène, un groupe alkyle en $C_1$-$C_{18}$ ou un groupe phényle, qui peut être non substitué ou substitué par un ou plusieurs substituants pris parmi le chlore, le brome et des groupes sulfoniques, méthyle, éthyle, méthoxy et/ou éthoxy,
$R^2$ représente un groupe éthylène ou propylène, et
$X^+$ représente le proton $H^+$ ou l'équivalent

$$\frac{M^{m+}}{m}$$

d'un cation de métal comme dans la revendication 1, pris parmi $Li^{1+}$, $Na^{1+}$, $K1^+$, $Mg^{2+}$, $Ca^{2+}$,

$Sr^{2+}$, $Ba^{2+}$, $Mn^{2+}$, $Cu^{2+}$, $Ni^{2+}$, $Cd^{2+}$, $Co^{2+}$, $Zn^{2+}$, $Fe^{2+}$, $Al^{3+}$, $Cr^{3+}$ et $Fe^{3+}$ ; ou bien représente un ion ammonium $N^+R^3R^4R^5R^6$, dans lequel les substituants $R^3$, $R^4$ et $R^5$ sur l'atome d'azote quaternaire sont chacun, indépendamment les uns des autres, un atome d'hydrogène ou un groupe hydroxyalkyle en $C_2$-$C_3$ et $R^6$ est l'un des groupes suivants : alkyles en $C_1$-$C_{30}$, alcényles en $C_1$-$C_{30}$, hydroxyalkyles en $C_2$-$C_3$ et cycloalkyles en $C_5$-$C_6$.

**4.** Composés du pérylène à groupes sulfoniques selon une ou plusieurs des revendications 1 à 3, caractérisés en ce que, dans la formule générale I qui y est indiquée :
A représente un radical bivalent -O-, >$NR^1$ ou >$N$-$CH_2$-$CH_2$-$SO_3^-X^+$ et
B le radical bivalent >$N$-$CH_2$-$CH_2$-$SO_3^-X^+$, et
n est le nombre 0,
où, dans les radicaux A et B ci-dessus :
$R^1$ représente l'hydrogène ou un alkyle en $C_1$-$C_4$ et
$X^+$ représente le cation $H^+$ ou

$$\frac{Ca^{2+}}{2}$$

ou un ion ammonium $N^+H_3R^6$, dans lequel $R^6$ est défini comme dans la revendication 2 ou 3.

**5.** Procédé de préparation des composés du pérylène à groupes sulfoniques de formule générale I, selon une ou plusieurs des revendications 1 à 4, caractérisé en ce que l'on fait réagir un sel monoalcalin du mono-anhydride de l'acide pérylène-3,4,9,10-tétracarboxylique,
les monoimides du mono-anhydride de l'acide pérylène-3,4,9,10-tétracarboxylique, ou bien le dianhydride de l'acide pérylène-3,4,9,10-tétracarboxylique,
avec des amines aliphatiques primaires à groupes sulfoniques de formule générale II

$H_2N$-$R^2$-$SO_3^-X^+$ (II),

dans laquelle $R^2$ et $X^+$ possèdent les significations indiquées à la revendiction 1, en solution aqueuse, de préférence à un pH alcalin, à des températures comprises entre 50 et 180 ° C.

**6.** Procédé de préparation de composés du pérylène de formule générale I ayant un ou deux groupes sulfoniques, selon une ou plusieurs des revendications 1 à 4, caractérisé en ce que l'on fait réagir
un sel monoalcalin du mono-anhydride de l'acide pérylène-3,4,9,10-tétracarboxylique,
des monoimides du mono-anhydride de l'acide pérylène-3,4,9,10-tétracarboxylique, ou le dianhydride de l'acide pérylène-3,4,9,10-tétracarboxylique,
avec des amines aliphatiques primaires à groupes sulfoniques de formule générale II

$H_2N$-$R^2$-$SO_3^-X^+$ (II)

dans laquelle $R^2$ et $X^+$ possèdent les significations indiquées à la revendication 1, dans des solvants organiques inertes à haut point d'ébullition, à des températures supérieures à 100 ° C, de préférence entre 180 et 230 ° C, éventuellement en présence de catalyseurs.

**7.** Procédé selon la revendication 5 ou 6, caractérisé en ce que l'on transforme en acides sulfoniques libres correspondants de formule I les produits de la réaction formés à l'état de sels sous forme de sulfonates, avantageusement après les avoir isolés de façon intermédiaire, par traitement avec des acides minéraux forts.

**8.** Utilisation des composés du pérylène de formule I à groupes sulfoniques, définis selon une ou plusieurs des revendications 1 à 4, comme dispersants de pigments pour obtenir des préparations pigmentaires.

**9.** Utilisation des préparations pigmentaires selon la revendication 8 dont le pigment de base dérive du groupe des composés du pérylène à la base du dispersant utilisé ou d'un dérivé de ceux-ci.

**10.** Utilisation des préparations pigmentaires selon la revendication 8 dont le pigment de base dérive d'un groupe de composés chimiquement différents du dispersant employé.

**11.** Utilisation des préparations pigmentaires selon une ou plusieurs des revendications 8 à 10 comme colorants pour pigmenter des matières organiques macromoléculaires d'origine naturelle ou synthétique qui sont en masses plastiques ou fondues, solutions de filage, vernis, laques ou peintures ou encres d'impression.

**12.** Utilisation comme colorants de fluorescence de composés du pérylène à groupes sulfoniques de formule I, facilement solubles, définis selon une ou plusieurs des revendications 1 à 4.

**13.** Utilisation des colorants fluorescents selon la revendication 12 pour colorer des milieux aqueux ou hydro-organiques ainsi que des matières organiques liquides ou solides.

**14.** Utilisation de composés du pérylène de formule I, peu solubles, selon une ou plusieurs des revendications 1 à 4, en particulier de leurs sels de cations de métaux divalents ou polyvalents, comme colorants pour pigmenter des matières organiques macromoléculaires d'origine naturelle ou synthétique.

**15.** Composé du pérylène de formule V :

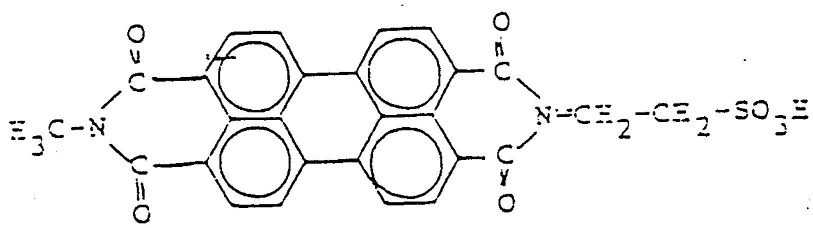

(V).